## Europäisches Patentamt
## European Patent Office
## Office européen des brevets

(11) Veröffentlichungsnummer: **0 239 883**
**A2**

(12) **EUROPÄISCHE PATENTANMELDUNG**

(21) Anmeldenummer: **87104049.9**

(22) Anmeldetag: **19.03.87**

(51) Int. Cl.³: **H 04 R 1/26**
**H 04 N 5/64**

(30) Priorität: **02.04.86 DE 3611033**

(43) Veröffentlichungstag der Anmeldung:
**07.10.87 Patentblatt 87/41**

(84) Benannte Vertragsstaaten:
**AT BE CH DE ES FR GB IT LI LU NL SE**

(71) Anmelder: **Deutsche Thomson-Brandt GmbH**
**Hermann-Schwer-Strasse 3 Postfach 2060**
**D-7730 Villingen-Schwenningen(DE)**

(72) Erfinder: **Schinnerling, Peter**
**Oberer Sonnenbühl 16**
**D-7730 VS-Pfaffenweiler(DE)**

(54) **Fernsehgerät für Mono-Tonwiedergabe.**

(57) Viele Fernsehgeräte werden heute im Stereo-Ton-Design angeboten. Ein Teil ist jedoch z.B. aus Kostengründen nur für Mono-Wiedergabe bestückt. Wenn derartige Fernsehgeräte den oder die Lautsprecher auf nur einer Seite der Bildröhre, meist rechts, konzentriert haben, ist die Tonwiedergabe "rechtslastig". Gewünscht ist die akustische Illusion, daß der Ton aus der Bildmitte heraustritt. Erfindungsgemäß läßt sich das bei Mono-Fernsehgeräten mit mehr als einem Lautsprechersystem ohne Mehrkosten dadurch erreichen, daß der Hochtöner links von der Bildröhre angeordnet ist und vorzugsweise diagonal zum Breitbandsystem oder Tieftöner, der sich rechts von der Bildröhre befindet.

EP 0 239 883 A2

## PATENTANMELDUNG

---

Fernsehgerät für Mono-Tonwiedergabe

---

Die Erfindung betrifft ein Mono-Gerät für die Wiedergabe von Bild und Ton nach dem Oberbegriff des ersten Anspruchs.

Viele der heutigen Fernsehgeräte sind designmäßig als Stereoton-Geräte konzipiert, auch wenn einige aus verschiedenen Gründen (Preis, Größe, Gewicht bei Portables u.a.) nur Monowiedergabe ermöglichen, da sie nur ein NF-Teil und einen Lautsprecher bzw. eine Lautsprecherkombination aufweisen. Sofern hierbei die Lautsprecherwiedergabe mindestens mit einer 2-Weg-Kombination vorgesehen ist, wird üblicherweise wie bei (bzgl. ihrem Design) echten Mono-Ton-Geräten nur der - von vorne, also Richtung auf den Bildschirm - "rechte Kanal" mit einem Breitband - (bzw. Tiefton-) Lautsprecher und einem Hochton-Lautsprecher bestückt. Dabei kann der Tieftöner auch so angebaut sein an der gleichen Seite, daß er seitlich abstrahlt. Generell entsteht so der Eindruck eines "rechtslastigen Klangbildes". Dabei kann die an sich gewollte und eigentlich selbstverständliche Illusion, daß der Ton aus der Bildmitte kommt, nicht eintreten.

.../

Der Erfindung lag die Forderung zu grunde, diesen Mangel zu beheben, d.h. ohne großen Aufwand diese Illusion, daß nämlich der Ton aus dem Bild komme, zu erreichen und die Schallabstrahlung und Klangqualität mit einfachen Mitteln zu verbessern.

Für den im Hauptanspruch angegebenen Oberbegriff wird diese Aufgabe erfindungsgemäß gelöst durch die angegebenen Kennzeichen.

Danach wird der Hochtöner allein auf einer Seite der Bildröhre eingebaut und zwar vorzugsweise im Lautsprecherfeld des "linken Kanals", entsprechend der üblichen Sitzweise der Instrumente eines Orchesters.

Weitere Einzelheiten und Ausgestaltungen der Erfindung sind den Unteransprüchen und der nachfolgenden Beschreibung zu entnehmen. Letztere nimmt Bezug auf die Zeichnung mit folgenden Figuren:

Figur 1 vereinfachte perspektivische Darstellung eines Fernsehgerätes mit Stereoton-Design mit einem Hochtöner und einem Breitband-Lautsprecher auf einer gedachten Diagonalen des Bildschirms;

Figur 2 entsprechend Figur 1, aber unter Verwendung eines Tieftöners, der an der Seitenwand montiert ist und seitlich abstrahlt;

Figur 3 vereinfachte Darstellung der Schallabstrahlung bei einer Anordnung gemäß Figur 1, dargestellt an einem von oben gesehenen Fernsehgerät;

.../

Figur 4   vereinfachte Darstellung der Schallabstrahlung bei
          einer Anordnung gemäß Figur 2, dargestellt an einem
          von oben gesehenen Fernsehgerät.

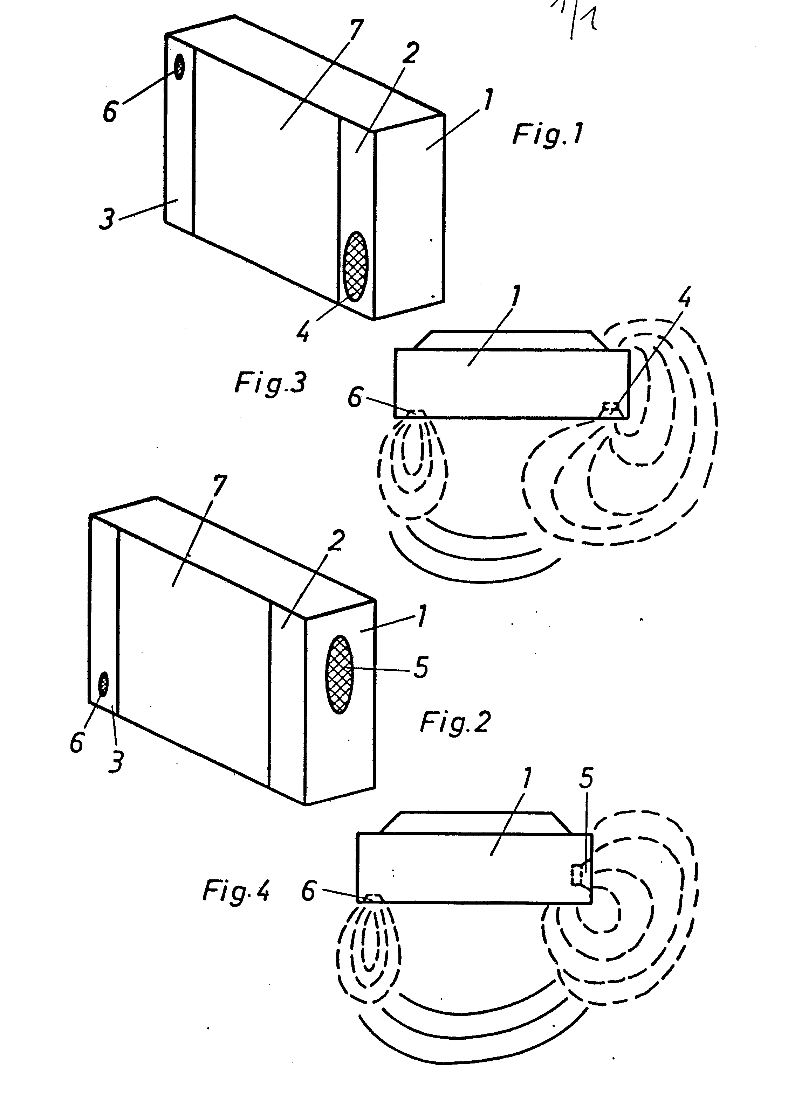

Die Figuren 1 und 2 zeigen Fernsehgeräte im Stereo-Ton-
Design. Vorzugsweise besitzt das Gehäuse 1 rechts und links
von der Bildröhre 7 spiegelsymmetrische Lautsprecher felder
2 und 3. Ein Hochtöner 6 ist in Figur 1 oben im
Lautsprecherfeld 3 und in Figur 2 unten im Lautsprecherfeld
3 angeordnet. Ein Breitbandlautsprecher ovaler Bauart 4
befindet sich in Diagonalanordnung im Lautsprecherfeld 2 der
Figur 1 und in Figur 2 ist ein runder Tieftöner 5 an der an
das Lautsprecherfeld 2 anschließenden Seitenwand angeordnet.

Gemäß der üblichen Orchestersitzordnung, Geiger links, ist
der Hochtöner jeweils im linken Lautsprecherfeld 3 vorgesehen, damit den Zuhörer die gebündelte Hochtonabstrahlung
stärker am linken Ohr trifft. Die resultierende Schallabstrahlung ist für die beiden Ausführungsbeispiele gemäß
Figur 1 und 2 in den Figuren 3 und 4 prinzipiell gezeigt.

Soweit gleiche oder entsprechende Gegenstände sich in den
Figuren 1 bis 4 wiederholen, wurden gleiche Bezugsnummern
verwendet.

Die Bauart der verwendeten Lautsprecher kann rund, oval oder
rechteckig sein. Für die Funktion der Erfindung, die
akustische Illusion des aus der Bildmitte austretenden
resultierenden Schalls zu erzeugen, spielen diese Bauarten
keine Rolle. In den Figuren sind sie als Ausführungsbeispiele zu verstehen.

.../

Aus dem bekannten akustischen "Gesetz der ersten Wellenfront" folgt, daß bei der erfindungsgemäßen Anordnung
der Hochtöner nun der Ton weitgehend vom Bildzentrum
abgestrahlt wird und die gewünschte Illusion somit wie
bei Stereowiedergabe erhalten bleibt.

.../

Postta
7730
26.

T-PA ___

0239883

## Figurenlegende

1   Gehäuse des Mono-Fernsehgerätes im Stereo-Ton-Design

2   rechtes Lautsprecherfeld

3   linkes Lautsprecherfeld

4   ovales Breitbandsystem

5   rundes Tieftonsystem

6   Hochtöner, runder Bauart

7   angedeuteter Bildschirm

.../

Postf.
7730 **0239883**

26. März 1986
T-PA 638

Patentansprüche

1. Mono-Fernsehgerät mit mindestens zwei Lautsprechern, wobei einer davon ein Hochtöner ist, d a d u r c h g e k e n n z e i c h n e t , .daß diese Lautsprecher so im Gehäuse rechts und links von der Bildröhre aufgeteilt eingebaut sind, daß der Hochtöner allein auf einer Seite der Bildröhre frontal abstrahlend und der oder die Lautsprecher für den mittleren und unteren Tonfrequenzbereich auf der anderen Seite der Bildröhre, frontal oder seitlich, angeordnet sind.

2. Mono-Fernsehgerät nach Anspruch 1, d a d u r c h g e k e n n z e i c h n e t , daß der Hochtöner in größtmöglicher Entfernung von dem Einbauort des Breitbandsystems resp. Tieftöners, vorzugsweise in Diagonalanordnung, vorgesehen ist.

3. Mono-Fernsehgerät nach Anspruch 2, d a d u r c h g e k e n n z e i c h n e t , daß das Breitbandsystem bzw. der Tieftöner an der entsprechenden Seitenwand und somit seitlich abstrahlend im Gehäuse eingebaut ist.

4. Mono-Fernsehgerät nach Anspruch 1, d a d u r c h g e k e n n z e i c h n e t , daß der Hochtöner bei Blickrichtung auf den Bildschirm links angeordnet ist.

5. Mono-Fernsehgerät nach Anspruch 1, d a d u r c h g e k e n n z e i c h n e t , daß das Gehäuse des Gerätes Stereo-Ton-Design aufweist.

.../

0239883

Fig.1

Fig.3

Fig.2

Fig.4